# EUROPÄISCHE PATENTSCHRIFT

(11) **EP 0 536 527 B1**
(45) Veröffentlichungstag und Bekanntmachung des Hinweises auf die Patenterteilung: **14.06.1995**
(21) Anmeldenummer: 92114695.7
(22) Anmeldetag: 28.08.1992
(51) Int. Cl.: F16H 7/12

(54) **Zahnriementrieb mit zumindest einer Spannrolle**
Toothed belt drive with at least one tensioning roller
Transmission à courroie crantée avec au moins un galet tendeur

(30) Priorität: 11.10.1991 DE 4133777
(43) Veröffentlichungstag der Anmeldung: 14.04.1993
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Lapp, Michael, W-5024 Pulheim 4 (DE); Querengaesser, Joerg, W-5000 Koeln 41 (DE); Schuessler, Joachim, W-5200 Siegburg (DE)
(74) Vertreter: Messulam, Alec Moses

(56) Entgegenhaltungen:
- DE-A- 2 524 744
- DE-A- 3 024 537
- DE-A- 3 240 075
- US-A- 1 914 908

## Beschreibung

Die Erfindung bezieht sich auf einen Zahnriementrieb mit zumindest zwei Zahnriemenrädern und zumindest einer Spannrolle, der im Oberbegriff des Patentanspruches 1 erläuterten Art.

Aus der DE-B-2 113 533 ist ein Zahnriementrieb für eine Brennkraftmaschine bekannt, dessen Spannung mit Hilfe einer Spannrolle einstellbar ist, die eine der außenseitigen Profilierung des Zahnriemens entsprechende Profilierung aufweist.

Die bekannte Spannrolle weist hierbei mehrere nebeneinander angeordnete, in Umfangsrichtung verlaufende V-förmige Nuten auf, die mit der entsprechend profilierten Außenseite des Zahnriemens eine Art Vielkeilriementrieb bildet.

Der bekannte Zahnriementrieb weist den Nachteil auf, daß der Zahnriemen eine Spezialausführung darstellt, die nur für diesen besonderen Anwendungszweck hergestellt werden muß.

Aus der DE-A-2 524 744 ist eine Spannrolle für einen Zahnriementrieb gemäß dem Oberbegriff des Patentanspruches 1 bekannt, bei dem der Zahnriemen, wie allgemein üblich, außenseitig glatt ausgeführt ist und dementsprechend die zur Einstellung der Spannung vorgesehene Spannrolle mit der ebenen Außenseite des Zahnriemens zusammenwirkt.

Wie an sich bekannt, können hierbei die Zahnriemenräder aber auch die Spannrolle mit seitlichen, den Zahnriemen führenden Bünden oder Borden versehen sein.

Aus der DE-C-2 910 871 ist ein Zahnriementrieb bekannt, bei dem zur Verringerung von Geräuschen, die während des Betriebes des Zahnriementriebes entstehen, gewisse aufeinander abgestimmte Veränderungen der Zahnprofile am Zahnriemen und an den Zahnriemenrädern im Querschnitt betrachtet vorgeschlagen werden.

Die hierfür erforderlichen Veränderungen der normalerweise standardisierten Zahnformen am Zahnriemen und den Zahnriemenrädern machen eine aufwendigere Herstellung des Zahnriemens oder der Zahnriemenräder erforderlich.

Die Aufgabe der Erfindung ist es, einen Zahnriementrieb mit zumindest zwei Zahnriemenrädern und zumindest einer Spannrolle derart zu verbessern, daß mit geringem Aufwand eine Verringerung der Geräusche erzielt wird, die infolge von durch die Zahnanregungen bewirkten Schwingungen in den Trummen des Zahnriementriebes auftreten.

Gemäß der Erfindung wird diese Aufgabe gelöst, indem bei einem Zahnriementrieb nach dem Oberbegriff des Patentanspruches 1, das im Kennzeichenteil des Patentanspruches 1 aufgezeigte Merkmal angewendet wird.

In den Ansprüchen 2 bis 6 sind weitere zweckmäßige Auslegungen der Erfindung erläutert.

Dadurch, daß die Riemenrolle an ihrem Außenumfang eine im Querschnitt konkave Profilwölbung aufweist, werden die an- und ablaufenden Trumme des Zahnriemens etwas konkav bzw. V-förmig verformt und durch die damit einhergehende Veränderung des Widerstandsquerschnittes eine Versteifung bewirkt, die dem Ausbilden von Schwingungen im Zahnriemen und daraus resultierenden Geräuschen entgegenwirkt.

Vorzugsweise ist die Riemenrolle an ihrem Außenumfang im Querschnitt V-förmig profiliert.

Die Riemenrolle kann hierbei unmittelbar am Außenlaufring einer Lagerung ausgebildet sein, sie kann aber auch durch auf den Außenlaufring der Lagerung aufgebrachte Blechpreßteile gebildet oder als ein Kunststoffring ausgebildet sein.

Der auf den Außenlaufring der Lagerung aufgebrachte Kunststoffring weist vorzugsweise einen seitlichen Überstand oder einen etwa I-Querschnitt auf.

Bei der Anordnung von zwei oder mehr Spannrollen kann die Tiefe der im Querschnitt konkaven Profilwölbung bzw. die V-förmige Profilwölbung in Abhängigkeit von der Länge der benachbarten Trumme mit unterschiedlicher Tiefe und mit unterschiedlichen Neigungen ausgeführt werden.

Die Erfindung wird anhand eines in den beiliegenden Zeichnungen gezeigten Ausführungsbeispieles näher erläutert. Es zeigt:
- Fig. 1: eine schematische Frontansicht einer Brennkraftmaschine mit einem Zahnriemenantrieb von der Kurbelwelle zu zwei obenliegenden Nockenwellen mit zwei Umlenk- bzw. Spannrollen;
- Fig. 2: einen vertikalen Schnitt durch die eine Umlenkrolle und
- Fig. 3: einen vertikalen Schnitt durch die zweite Umlenk- bzw. Spannrolle.

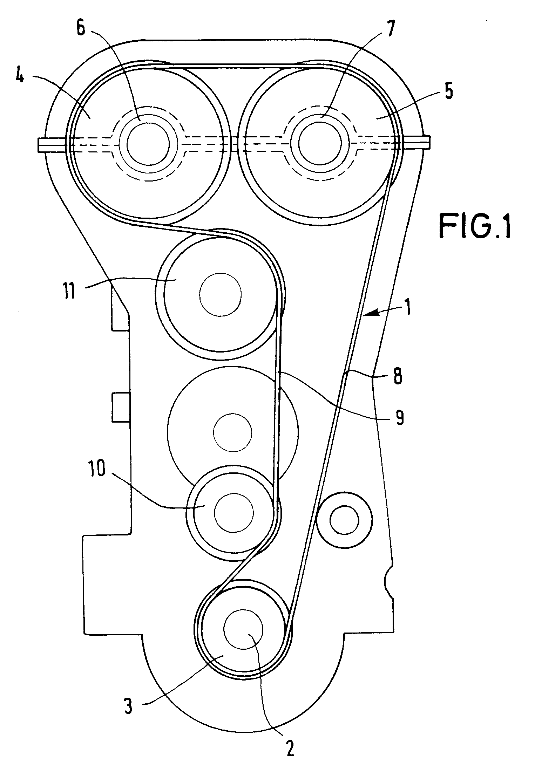

Bei dem in Fig. 1 schematisch dargestellten Zahnriementrieb für eine Brennkraftmaschine treibt ein Zahnriemen 1 mit einer entsprechenden innenseitigen Zahnprofilierung und einer außenseitigen glatten Profilierung von einer Kurbelwelle 2 über ein mit dieser verbundenes erstes Zahnriemenrad 3 ein zweites Zahnriemenrad 4 und ein drittes Zahnriemenrad 5 mit doppeltem Durchmesser an, die mit entsprechenden obenliegenden Nockenwellen 6 und 7 treibend verbunden sind. Bei rechtsdrehender Kurbelwelle 2 ergibt sich hierbei ein gestrecktes Zugtrumm 8 und ein Lostrumm 9, das über eine Umlenkrolle 10 und eine Umlenk- und Spannrolle 11 geführt wird.

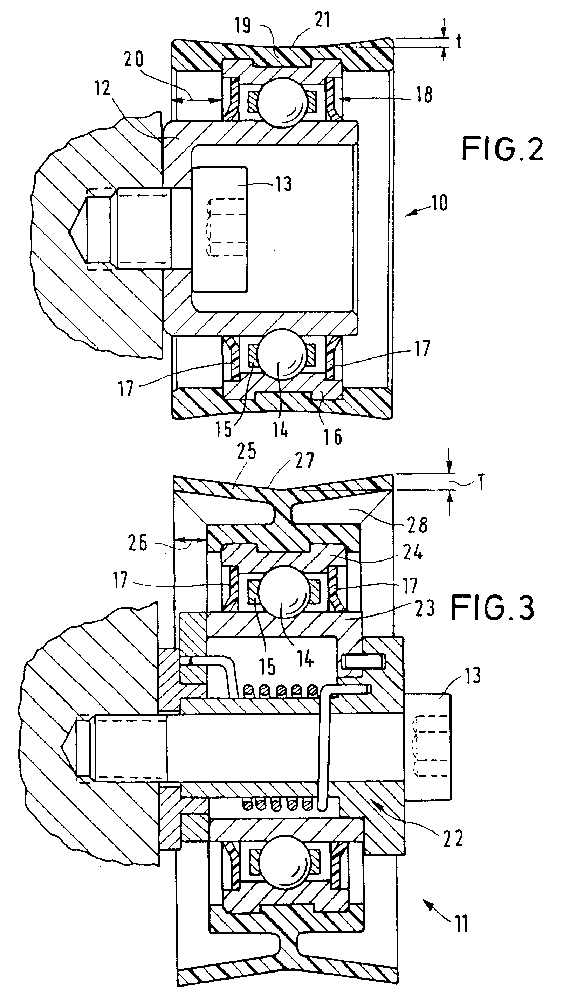

Die in Fig. 2 in einem vertikalen Schnitt gezeigte Umlenkrolle 10 besteht im wesentlichen aus einem Träger/Innenlaufring 12, der über einen Befestigungsbolzen 13 am Motorblock befestigt ist und auf dem eine aus Wälzkörper 14, einem Wälzkörperkäfig 15, einem Außenlaufring 16 und seitlichen Dichtungen 17 bestehende Lagerung 18 angeordnet ist, deren Außenlaufring 16 mit einer Riemenrolle 19 aus Kunststoffmaterial verbunden ist. Wie aus der Fig. 2 durch die Maßlinien und die Maßpfeile angedeutet, weist der Außenumfang der Riemenrolle 19 einen seitlichen Überstand 20 und im Querschnitt eine konkave Profilwölbung 21 von der Tiefe t auf.

Die in Fig. 3 in einem vertikalen Schnitt gezeigte Umlenk- und Spannrolle 11 weist eine Lagerung 22 in Form einer Einstell- oder Nachstellvorrichtung auf, mittels der sie in bekannter Weise an einem Bauteil der Brennkraftmaschine montiert wird. Sie weist weiterhin wieder einen Träger/Innenlaufring 23 und einem Außenlaufring 24 auf. Zwischen dem Außenlaufring 24 und dem Innenlaufring 23 sind wieder Wälzkörper 14 in einem Wälzkörperkäfig 15 und seitliche Dichtungen 17 angeordnet. Mit dem Außenlaufring 24 des Rillenkugellagers ist eine Riemenrolle 25 aus elastischem Kunststoffmaterial verbunden, deren Außenumfang wieder einen seitlichen Überstand 26 und eine im Querschnitt konkave Profilwölbung 27 von durch Maßlinien und Maßpfeile angedeuteter Tiefe T aufweist.

Wie aus einem Vergleich der Figuren 2 und 3 zu ersehen ist, kann die Tiefe der konkaven Profilwölbung der beiden Riemenrollen 19 und 25 unterschiedlich sein.

Die Riemenrolle 19 weist seitlichen Überstand 20 über den Außenlaufring 16 auf und die Riemenrolle 25 weist einen Überstand 26 und darüber hinaus im Querschnitt I- oder Doppel-T-förmiges Profil auf. Eine Vielzahl von sich zwischen ihrem Innenumfang und ihrem Außenumfang erstreckende radiale Abstützrippen 28 auf stützen den Außenumfang ab.

Durch den seitlichen Überstand bzw. durch die I-förmige Querschnittsgestaltung wird durch die seitlichen Ränder der Riemenrolle 19 bzw. 25 auch eine elastische Federfunktion zur Verfügung gestellt, die einem Aufschaukeln von durch die Zahnanregungen herrührenden Schwingungen dämpfend entgegenwirkt und dementsprechend das Entstehen von durch solche Schwingungen hervorgerufenen Geräuschen unterbindet.

Selbstverständlich können die dargestellte Einstell- oder Nachstellvorrichtung die unterschiedlichsten bekannten Ausführungsformen aufweisen und auch die Lagerungen für die Umlenk- oder Spannrollen können in verschiedensten, dem Ingenieur geläufigen Bauformen, wie Nadellagerungen und dergleichen, ausgebildet werden.

## Patentansprüche

1. Zahnriementrieb mit zumindest zwei Zahnriemenrädern (3, 4 und 5) und zumindest einer Spannrolle (10 und 11) die an der ungezahnten Seite des Zahnriemens (1) angreift und die im wesentlichen aus einer auf einem Träger (12) bzw. auf einer Einstell- oder Spannvorrichtung (23) über eine Lagerung (18 bzw. 22) drehbar gehaltenen Riemenrolle (19 bzw. 25) besteht,
**dadurch gekennzeichnet,** daß
- die Riemenrolle (19 bzw. 25) an ihrem Außenumfang im Querschnitt eine konkave Profilwölbung (21) aufweist.

2. Zahnriementrieb nach Anspruch 1,
**dadurch gekennzeichnet,** daß
- die Riemenrolle (19 bzw. 25) an ihrem Außenumfang im Querschnitt eine V-förmige Profilwölbung (27) aufweist.

3. Zahnriementrieb nach den Ansprüchen 1 und 2,
**dadurch gekennzeichnet,** daß
- die Riemenrolle unmittelbar vom Außenlaufring der Lagerung gebildet ist.

4. Zahnriementrieb nach den Ansprüchen 1 und 2,
**dadurch gekennzeichnet,** daß
- die Riemenrolle (19 bzw. 25) von einem auf den Außenlaufring (16 bzw. 23) der Lagerung (18 bzw. 22) mit seitlichem Überstand (20 bzw. 26) aufgebrachten Kunststoffring (19 bzw. 25) gebildet ist.

5. Zahnriementrieb nach Anspruch 4,
**dadurch gekennzeichnet,** daß
- der auf den Außenlaufring (23) der Lagerung (22) aufgebrachte Kunststoffring (25) im Querschnitt I-förmig ausgebildet ist und eine Vielzahl von sich radial erstreckenden Rippen (28) aufweist.

6. Zahnriementrieb nach den Ansprüchen 1 und 5,
**dadurch gekennzeichnet,** daß
- die Umlenk- oder Spannrollen (10 und 11) mit Riemenrollen (19 bzw. 25) mit Querschnitt konkaver oder V-förmiger Profilwölbung (21 bzw. 27) unterschiedliche Winkelneigung bzw. Tiefe (t bzw. T) aufweisen.

## Claims

1. A toothed belt drive having at least two toothed pulleys (3, 4 and 5) and at least one tensioning pulley (10 and 11) that engages on the untoothed side of the toothed belt (1) and consists essentially of a belt pulley (19; 25) mounted to rotate on a mounting (12) or on a setting or adjusting device (23) by means of a hearing (18; 22),
characterised in that
- the belt pulley (19; 25) exhibits a concave cross-sectional profile (21) at its outer circumference.

2. A toothed belt drive according to claim 1,
characterised in that
- the belt pulley (19; 25) exhibits a V-shaped cross-sectional profile (27) at its outer circumference.

3. A toothed belt drive according to one of claims 1 and 2,
characterised in that
- the belt pulley is formed directly from the outer race of the bearing.

4. A toothed belt drive according to one of claims 1 and 2,
characterised in that
- the belt pulley (19; 25) comprises a ring (19; 25) of synthetic material that is fitted on the outer race (16; 23) of the bearing (18; 22) with lateral projection (20; 26).

5. A toothed belt drive according to claim 4,
characterised in that
- the ring (25) of synthetic material fitted on the outer race (23) of the bearing (22) has an I-shaped cross-section and exhibits a plurality of radially extending ribs (28).

6. A toothed belt drive according to claims 1 and 5,
characterised in that
- the deflection or tensioning pulleys (10 and 11) comprising belt pulleys (19; 25) having a concave or V-shaped cross-sectional profile (21; 27) have a different angle of inclination and/or depth (t; T).

## Revendications

1. Transmission à courroie dentée avec au moins deux poulies de courroie (3, 4 et 5) et au moins un galet tendeur (10 et 11), qui agit sur le côté non denté de la courroie dentée (1) et qui est constitué pour l'essentiel d'un galet de courroie (19 ou 25) maintenu à rotation, par l'intermédiaire d'un palier (18 ou 22), sur un support (12) ou sur un dispositif régleur ou tendeur (23), **caractérisée** en ce que le galet de courroie (19 ou 25) présente, sur sa périphérie extérieure, un bombement concave (21) de son profil de section.

2. Transmission à courroie dentée selon la revendication 1, **caractérisée** en ce que le galet de courroie (19 ou 25) présente, sur sa périphérie extérieure, un bombement en V (27) de son profil de section.

3. Transmission à courroie dentée selon les revendications 1 et 2, **caractérisée** en ce que le galet de courroie est directement formé par la bague de roulement extérieure du palier.

4. Transmission à courroie dentée selon les revendications 1 et 2, **caractérisée** en ce que le galet de courroie (19 ou 25) est formé par une bague en matière plastique (19 ou 25) disposée avec un porte-à-faux latéral (20 ou 26) sur la bague de roulement extérieure (16 ou 23) du palier (18 ou 22).

5. Transmission à courroie dentée selon la revendication 4, **caractérisée** en ce que la bague en matière plastique (25) disposée sur la bague de roulement extérieure (23) du palier (22) présente une section en I et possède une multiplicité de nervures (28) s'étendant radialement.

6. Transmission à courroie dentée selon les revendications 1 et 5, **caractérisée** en ce que les galets tendeurs ou de renvoi (10 et 11), respectivement équipés d'un galet de courroie (19 ou 25) avec un bombement concave ou en V (21 ou 27) de son profil de section, présentent une inclinaison angulaire, ou respectivement une profondeur, de valeurs respectives différentes (t ou T).
